# EUROPEAN PATENT APPLICATION

(11) **EP 2 684 540 A1**
(43) Date of publication of application: **15.01.2014**
(21) Application number: 12187880.5
(22) Date of filing: 10.10.2012
(51) Int. Cl.: A61C 11/00, A61C 11/08

(54) **Auxiliary device for articulator**

(30) Priority: 11.07.2012 TW 101124920
(71) Applicant: National Cheng Kung University, Tainan City (TW)
(72) Inventor: Fang, Jing-Jing, 701 Tainan City (TW); Wong, Tung-Yiu, 708 Tainan City (TW); Wu, Tung-Chin, 806 Kaohsiung City (TW); Kuo, Tai-Hong, 710 Tainan City (TW); Tseng, Chun-Ju, 333 Taoyuan County (TW)
(74) Representative: Wablat Lange Karthaus

(57) **Abstract**

An auxiliary device for an articulator includes a base and at least an adjusting structure. The base is provided for positioning an articulator, and the adjusting structure is disposed on the base. The adjusting structure includes a first ball joint, a second ball joint and a connecting assembly. The first ball joint is connected to the base, and the two ends of the connecting assembly are connected to the first ball joint and the second ball joint, respectively. The adjusting structure is moved relatively to the articulator by the movement of at least one of the first ball joint and the second ball joint, thereby adjusting the position of a dental cast disposed on the articulator. The auxiliary device is advantageous for conveniently adjusting the dental cast disposed on the articulator and accelerating the process of the preoperative planning.

## Description

### BACKGROUND OF THE INVENTION

### Field of Invention

The present invention relates to an auxiliary device and, in particular, to an auxiliary device for an articulator.

### Related Art

Clinically, there are many patients having special maxillofacial ratios or incorrect occlusal relationships between upper and lower rows of teeth. Such a kind of abnormally growth problem often accompanies with the facial asymmetry, the mandibular prognathism, the mandible retrusion or the poor occlusal condition on the organization structure. Regarding the life, the patient tends to encounter the stoppages, such as the pronunciation difficulties, the chewing digestive diseases, the lack of confidence, or even the other's discrimination and the people's strange looks.

Orthodontics is one of the developed therapeutic methods to solve the above problems. In general, during the first consultation, it is necessary to collect the growing record of the patient, make the dental plaster model, inspect the mouth by X-ray, and take the photos of the face and teeth for drafting the proper treatment plan. Then, the removable and fixed orthodontic treatments are applied in sequence according to the treatment plan. When the situation of the patient is too worse to be treated by orthodontics, it still exists another general and effective treatment, which is to correct the spatial positions of the maxilla and mandible through the surgery and to reconstruct the good occlusal relationship. This kind of surgery is typically referred to as an orthognathic surgery. The orthognathic surgery is mainly to correct the upper facial structure of the jaw, such as the facial asymmetry, the facial harmonious proportion or the like, as well as the growth problem, or to correct the skeleton structure change, which cannot be easily or cannot be completed using braces. Because the orthognathic surgery is much difficult and complex, the detailed preoperative diagnosis has to be made such that the orthognathic surgery planning can be established in connection with the actual situation of the patient's maxillofacial skeleton structure.

As mentioned above, either the orthodontics or the orthognathic surgery needs an additional device for transferring the relative relationship between the dentitions, maxilla and mandible, so that the operator or doctor is able to draft a precise surgery plan for the patient. The conventional method is to use a face bow to transfer the relative relationship to an articulator, and then utilize the cephalometric analysis to draft the orthodontic plan or orthognathic plan.

During a simulation surgery with the articulator, the doctor usually draws some scale lines on the dental cast after positioning so as to compare the movements before and after the surgery to find their difference. After drawing the scale lines, the dental cast is properly cut, and the separated tooth portions are held by hands for further manually adjusting their positions or angles. After moving the desired positions, they are fixed on the palate by wax, so that the doctor can easily observe the relative positions and occlusal relationship of the upper and lower dental casts. Accordingly, the doctor can predict the appearance and symmetry after the surgery.

However, the doctor must hold the dental cast as well as the separated tooth portions for a long time. In addition, it is necessary to melt the wax for performing another adjustment or movement. The repeated melting and solidifying of the wax are time and labor consumptions, and may move the desired positions so as to lose the precision. Besides, the conventional method for fixing the dental casts by wax and manual operation is not stable enough during the fixing process.

Therefore, it is an important subject to provide a device applied to an articulator for adjusting the dental cast, especially the teeth portions of the dental cast in the preoperative planning, in multiple angles and directions, and easily fixing or loosing the dental cast, thereby benefiting the preoperative planning process.

### SUMMARY OF THE INVENTION

In view of the foregoing subject, an objective of the present invention is to provide a device applied to an articulator for adjusting the dental cast, especially the teeth portions of the dental cast in the preoperative planning, in multiple angles and directions, and easily fixing or loosing the dental cast, thereby benefiting the preoperative planning process.

Another objective of the present invention is to provide an auxiliary device for an articulator, wherein the auxiliary device has a base for positioning the articulator so as to make the articulator more stable and secured.

To achieve the above objectives, the present invention discloses an auxiliary device for an articulator. Herein, a dental cast is disposed on the articulator. The auxiliary device includes at least an adjusting structure and a base for positioning the articulator. The adjusting structure is disposed on the base and includes a first ball joint, a second ball joint, and a connecting assembly. The first ball joint is connected to the base, and two ends of the connecting assembly are connected to the first ball joint and the second ball joint, respectively. The adjusting structure is moved relatively to the articulator by a movement of at least one of the first ball joint and the second ball joint, thereby adjusting a position of the dental cast.

In one embodiment, the first ball joint has a rod portion and a rotation portion, and the first ball joint is connected to the base through the rod portion and connected to the connecting assembly through the rotation portion.

In one embodiment, the second ball joint has a rod portion and a rotation portion, and the second ball joint is connected to the dental cast through the rod portion and connected to the connecting assembly through the rotation portion.

In one embodiment, the rod portion has two elongated members, which are adjustably combined.

In one embodiment, the connecting assembly has at least an accommodating space for accommodating the first ball joint or the second ball joint.

In one embodiment, the connecting assembly has two accommodating spaces disposed at the two ends of the connecting assembly.

In one embodiment, the connecting assembly has two pillar portions, which are pivotly connected to each other.

In one embodiment, the connecting assembly has a compressing member, and the pillar portions are pivotly connected to the compressing member.

In one embodiment, the adjusting structure is detachably disposed on the base.

In one embodiment, the auxiliary device further includes at least a fixing unit disposed on the base for fixing the articulator on the base.

In one embodiment, the fixing unit has a fixing member and an adjusting member, and the fixing member is connected to the adjusting member.

In one embodiment, the adjusting member comprises a horizontal adjusting member or a vertical adjusting member.

In one embodiment, the adjusting member comprises a rotation horizontal adjusting member or rotation vertical adjusting member.

In one embodiment, the base and the articulator have corresponding locking structures, or a sliding rail and a sliding recess, respectively.

In one embodiment, the auxiliary device further includes a power supply module disposed on the base, and the power supply module has a power input unit and at least a power output unit.

As mentioned above, the auxiliary device of the invention has at least an adjusting structure and a base, so that the articulator can be steadily fixed on the base and then the dental cast or teeth portions can be adjusted through the movement of the adjusting structure, which has high degrees of freedom. In addition, after adjusting to a desired angle, the adjusting structure can easily fixed through a compressing member. This is very simple in operation and does not need to use wax to fix the teeth portions. Thus, the time for applying and solidifying the wax can be skipped, which allows the operator and doctor to precisely create the operation plan. Furthermore, since the auxiliary device can enhance the stability and convenience of the articulator in operation, the operation of the articulator and the preoperative planning can be properly adjusted immediately.

Compared with the conventional art, the adjusting structure of the invention is similar to a robot arm, so that the operator or doctor can easily adjusting the adjusting structure to replace the conventional manual operation. This feature can reduce the tiredness and increase the stability during the repeated adjustment processes. Besides, since the adjusting structure can be easily fixed or released, the repeated steps of solidifying and melting wax can be omitted. Thus, the present invention can achieve the real-time adjustment and rapid response. More importantly, the adjusting structure can be moved in multiple angle or direction and steadily support the dental cast, so that the operator or doctor can fast and precisely make the operation plan. According to the application of the invention, the reliability and convenience of the preoperative planning processes of the orthodontics and orthognathic planning can be effectively improved. In addition, the auxiliary device for an articulator of the invention further has a fixing unit disposed on the base for enhancing the connection of the articulator and the base. Thus, various kinds of articulators can have better application and utility with the auxiliary device.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic diagram showing an auxiliary device for an articulator according to a preferred embodiment of the present invention;

FIG. 2A is a schematic diagram showing another auxiliary device for an articulator according to the preferred embodiment of the present invention;

FIG. 2B is a schematic diagram showing an articulator disposed on the auxiliary device of FIG. 2A;

FIG. 3A is a schematic diagram showing another auxiliary device for an articulator according to the preferred embodiment of the present invention;

FIG. 3B is a perspective view of a fixing unit of FIG. 3A;

FIG. 3C is a schematic diagram showing the operation of the fixing unit of FIG. 3A;

FIG. 3D is a schematic diagram showing an articulator disposed on the auxiliary device of FIG. 3A; and

FIG. 4 is a perspective view of a power supply module of another auxiliary device according to the preferred embodiment of the present invention.

### DETAILED DESCRIPTION OF THE INVENTION

The present invention will be apparent from the following detailed description, which proceeds with reference to the accompanying drawings, wherein the same references relate to the same elements.

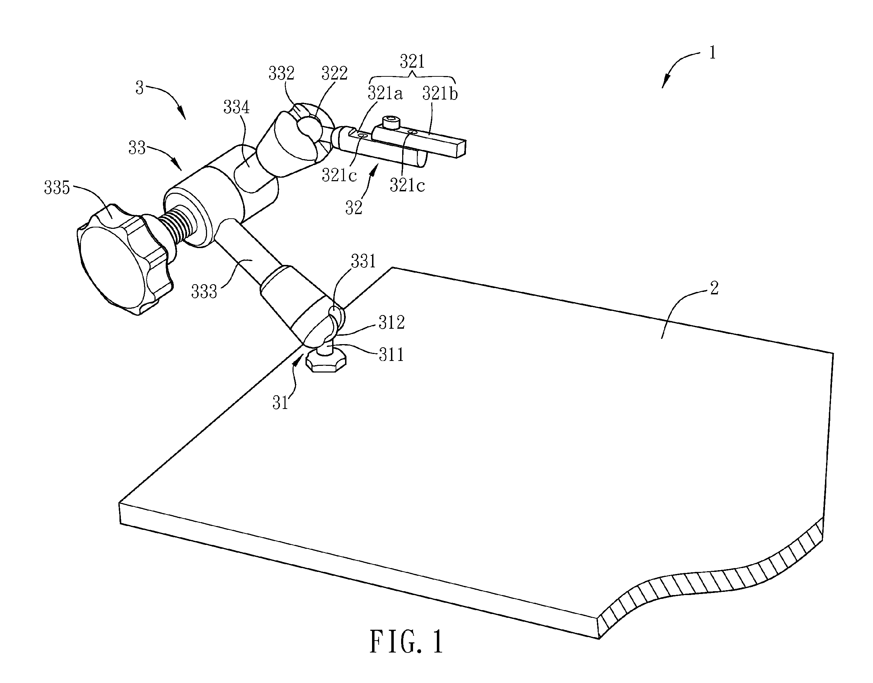

FIG. 1 is a schematic diagram showing an auxiliary device 1 for an articulator according to a preferred embodiment of the present invention. Referring to FIG. 1, the auxiliary device 1 includes a base 2 and at least an adjusting structure 3. The base 2 is a metal plate for positioning an articulator so as to increase its operating stability. The adjusting structure 3 is detachably disposed on the base 2. For example, the adjusting structure 3 is disposed on the base 2 by way of screwing or locking, so that the adjusting structure 3 can be detached from the base 2. The structure feature and elements of the adjusting structure 3 will be described hereinafter.

As shown in FIG. 1, the adjusting structure 3 includes a first ball joint 31, a second ball joint 32, and a connecting assembly 33. The first ball joint 31 has a rod portion 311 and a rotation portion 312. In more detailed, the first ball joint 31 is connected to the base 2 through the rod portion 311, connected to the connecting assembly 33 through the rotation portion 312. The rotation portion 312 preferably has a ball shape for providing a larger degree of freedom.

The second ball joint 32 also has a rod portion 321 and a rotation portion 322. Similarly, the second ball joint 32 is connected to the connecting assembly 33 through the ball-shaped rotation portion 322. The rotation portions 312 and 322 of the first and second ball joints 31 and 32 are connected to two ends of the connecting assembly 33, respectively. In details, the rotation portion 312 of the first ball joint 31 is connected to one end of the connecting assembly 33 close to the base 2, and the rotation portion 322 of the second ball joint 32 is connected to the other end of the connecting assembly 33 away from the base 2. However, the present invention is not limited to the above configuration, and is adjustable according to the type of the articulator or the operation habit. In all connections, the first and second ball joints are necessary for providing high degree of freedom.

The rod portion 321 of the second ball joint 32 is connected to the dental case and includes two elongated members 321a and 321b. The elongated member 321a of the rod portion 321 is firmly connected to the rotation portion 322, and the elongated member 321b is adjustably connected to the elongated member 321a and directly connected to the dental cast. In more detailed, the elongated members 321a and 321b are configured with a plurality of holes 321c. According to the relative positions of the adjusting structure 3 and the dental cast, the user can easily adjust the length of the elongated members 321a and 321b by fixing with different holes 321c. This is not to limit the invention, and in practice, the rod portion or the elongated member can be an adjustable element, such as an extendable element or sliding element.

In this embodiment, the connecting assembly 33 includes two accommodating spaces 331 and 332, two pillar portions 333 and 334, and a compressing member 335. The accommodating space 331 has a recess structure corresponding to the rotation portion 312 of the first ball joint 31, while the accommodating space 332 has a recess structure corresponding to the rotation portion 322 of the second ball joint 32. The two pillar portions 333 and 334 are pivotly connected to the compressing member 335. In other words, the pillar portions 333 and 334 are connected with using the compressing member 335 as their shaft. The compressing member 335 can lock the pillar portions 333 and 334 so as to fix their relative positions. In this embodiment, the compressing member 335 is, for example but not limited to, a rotary hydraulic valve, a rotary mechanical valve, or an electrical mechanical valve. Herein, the electrical mechanical valve can be driven by a motor. The accommodating spaces 331 and 332 are disposed at two ends of the connecting assembly 33. In more specific, the two accommodating spaces 331 and 332 are disposed at the ends of the pillar portions 333 and 334, respectively, which are away form the pivot points.

The elements and connections of the adjusting structure 3 are described hereinabove. In brief, the adjusting structure 3 is connected to the base 2 by the rod portion 311 of the first ball joint 31, the elongated member 321b is connected to the dental cast, and the rotation portions 312 and 322 are received in the accommodating spaces 331 and 332, respectively. Thus, the adjusting structure 3 can provide the movement of almost 360 degrees through the first ball joint 31 and the second ball joint 32 for adjusting the dental cast or the teeth portions to the desired positions.

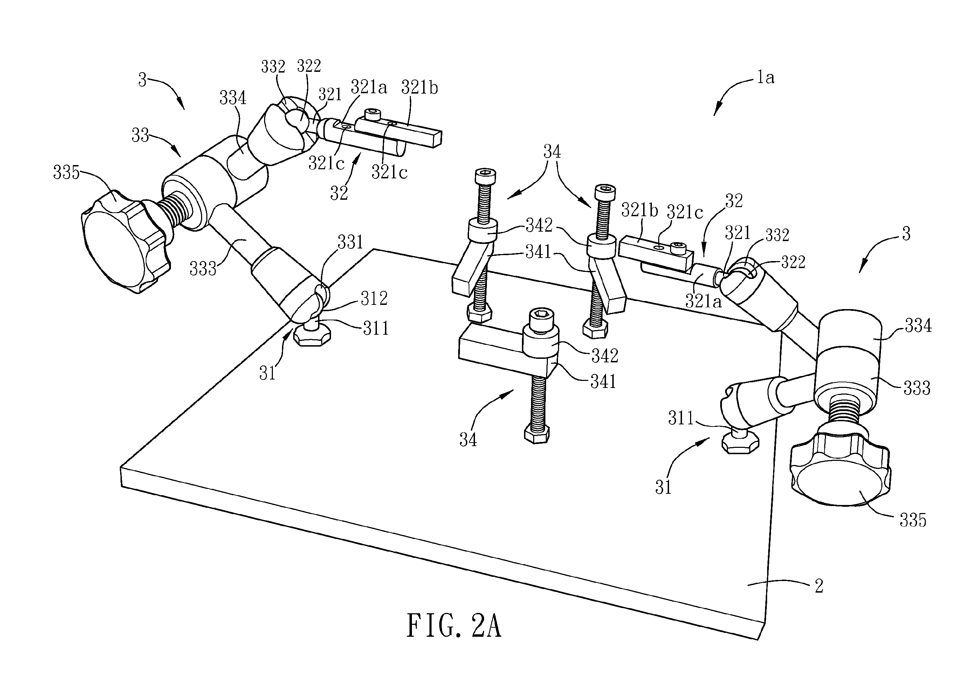

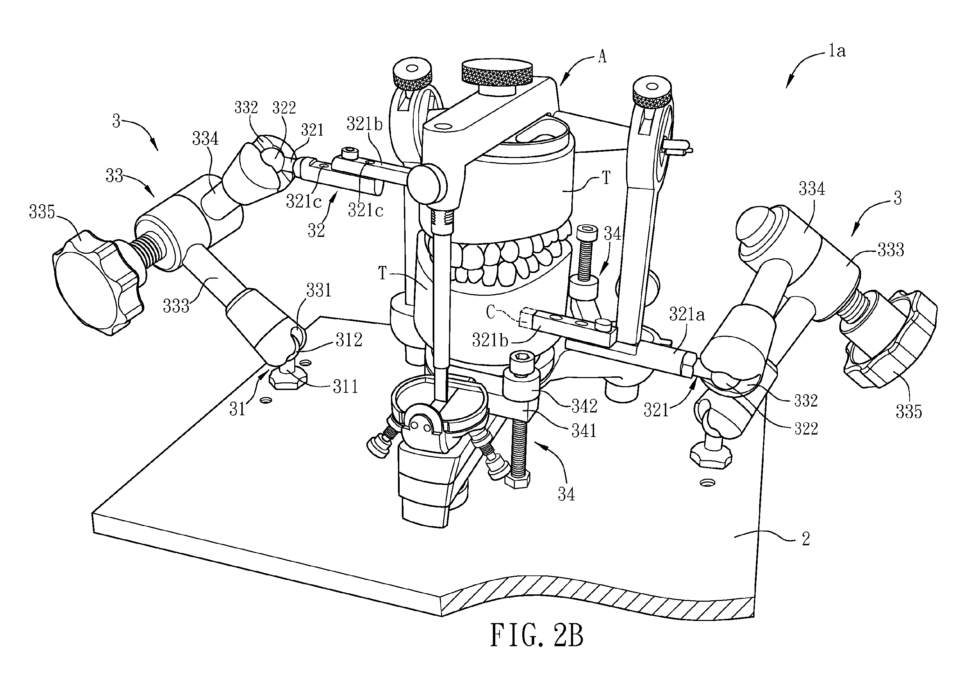

FIG. 2A is a schematic diagram showing another auxiliary device 1a for an articulator according to the preferred embodiment of the present invention, and FIG. 2B is a schematic diagram showing an articulator A disposed on the auxiliary device 1a of FIG. 2A. As shown in FIGS. 2A and 2B, the auxiliary device 1a is almost the same as the previous auxiliary device 1 but further includes an additional adjusting structure 3. That is, the auxiliary device 1a includes two adjusting structures 3. The adjusting structures 3 are disposed at opposite sides of the base 2 for adjusting and fixing the dental cast T or the teeth portions, respectively. Besides, the degree of freedom provided by the auxiliary device 1a is up to 7, so that the operator or doctor can easily make the proper preoperative planning. Similarly, since each of the two adjusting structures 3 has a first ball joint 31 and a second ball joint 32, the auxiliary device 1a can provide high degree of freedom.

In addition, this configuration of two adjusting structures 3 disposed at opposite sides is suitable for operation by both hands. However, this is not to limit the invention and, of course, the two adjusting structures can be disposed at the same side of the base, which can preserve some space for other purposes. Besides, the number of the adjusting structures is not limited and can be determined based on the number of the dental casts or the operation requirement. Herein, the articulator is configured to position the dental cast of the patient who needs the orthodontics and orthognathic surgery. The dental cast includes the mandible and palate dental casts manufactured according to the mandible and palate teeth of the patient. To be noted, when making the preoperative plan of more complex orthognathic surgery, it usually needs three or more adjusting structures.

Referring to FIG. 2B, the method for positioning the dental cast T on the articulator A according to the situation of the patient is well known by those skilled in the art, so the description thereof will be omitted. In this embodiment, the mandible and palate dental casts are disposed on the articulator A. However, the invention is not limited to this, and it is possible to dispose either the mandible dental cast or the palate dental cast on the articulator A.

The dental cast T can be disposed on the articulator A after the articulator A is connected to the auxiliary device 1a. Otherwise, the dental cast T can also be disposed on the articulator A in advance, and then the assembled dental cast T and articulator A are together disposed on the auxiliary device 1a. After the dental cast T, the articulator A and the auxiliary device 1a are connected, the two adjusting structures 3 are connected to the dental cast T by their elongated members 321b. In more specific, one of the adjusting structures 3 is connected to the mandible dental cast, while the other one is connected to the palate dental cast. The connection method includes locking or adhering. For example, the dental cast T has a recess C, and the elongated member 321b of the adjusting structure 3 is inserted into the recess C. Then, the adhesive is applied to enhance the connection.

After connecting the adjusting structures 3 to the dental cast T, the first ball joint 31 and the second ball joint 32 are adjusted to move the pillar portions 333 and 334 so as to adjust the positions of the mandible and palate dental casts. In the following example, only one adjusting structure 3 is configured. First, the compressing member 335 of the adjusting structure 3 is loosened, so that the adjusting structure 3 can provide more degree of freedom. For example, the first ball joint 31 and the second ball joint 32 can rotate the pillar portions 333 and 334 so as to adjust the dental cast T. The operator can control the adjusting structure 3 to move the mandible dental cast and/or the palate dental cast. After the dental cast T is adjusted to the desired position, the compressing member 335 is fastened to fix the adjusting structure as well as the dental cast T. In the conventional art, the operator or doctor usually uses wax during the adjustment and fixing of the dental cast. Accordingly, if the dental cast is adjusted for several times, the wax must be melted and solidified repeatedly, which results in wastes in labor and materials. Compared to the conventional art, the present invention uses the auxiliary device 1a to adjust the position of the articulator, so that the operator can easily move the dental cast T to the desired position and fix it.

The auxiliary device may further include at least a fixing unit. Referring to FIGS. 2A and 2B, the base 2 is configured with three fixing units 34. Each fixing unit 34 has a fixing member 341 and an adjusting member 342, and the fixing member 341 is connected to the adjusting member 342. The adjusting member 342 can adjust the height of the fixing member 341 along a vertical direction, so that the fixing element 341 can contact against the articulator A so as to increase the stability of the articulator A on the base 2. This configuration can also improve the precision in adjusting the position of the dental cast T. To be noted, the shape and size of the fixing unit 34 are not limited in this invention.

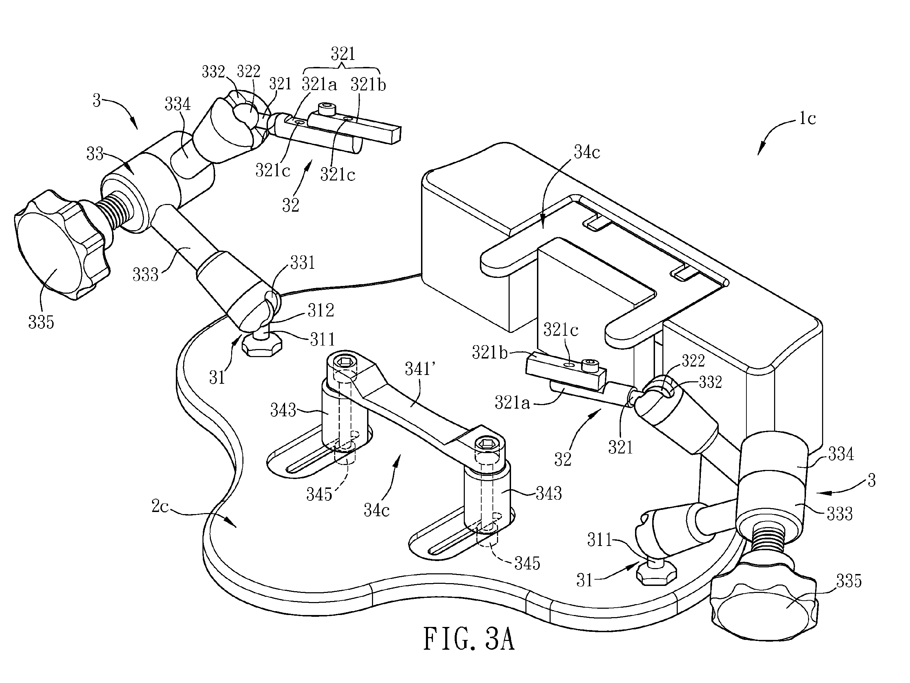

FIG. 3A is a schematic diagram showing another auxiliary device 1c for an articulator according to the preferred embodiment of the present invention. With reference to FIG. 3A, the auxiliary device 1c is mostly the same as the auxiliary device 1a, and their difference will be described hereinafter. In this embodiment, the base 2c has a webfoot shape which is more suitable for connecting with the articulator. In addition, the auxiliary device 1c includes two fixing units 34c, which have slightly different structures. One of the fixing units 34c is disposed at the front end of the base 2c, while the other one is disposed at the rear end of the base 2c.

The fixing unit 34c disposed at the front end of the base 2c includes a fixing member 341' and four adjusting members, which include horizontal adjusting members 343 and vertical adjusting members 345.

In more specific, two horizontal adjusting members 343 are disposed on the base 2c and connected to a sliding track S'. The horizontal adjusting members 343 can slide on the sliding tracks S' so as to adjust the horizontal position of the fixing member 341'. The vertical adjusting member 345 can adjust the fixing member 341' corresponding to the height of the articulator, so that the fixing member 341' can contact against and fix the articulator.

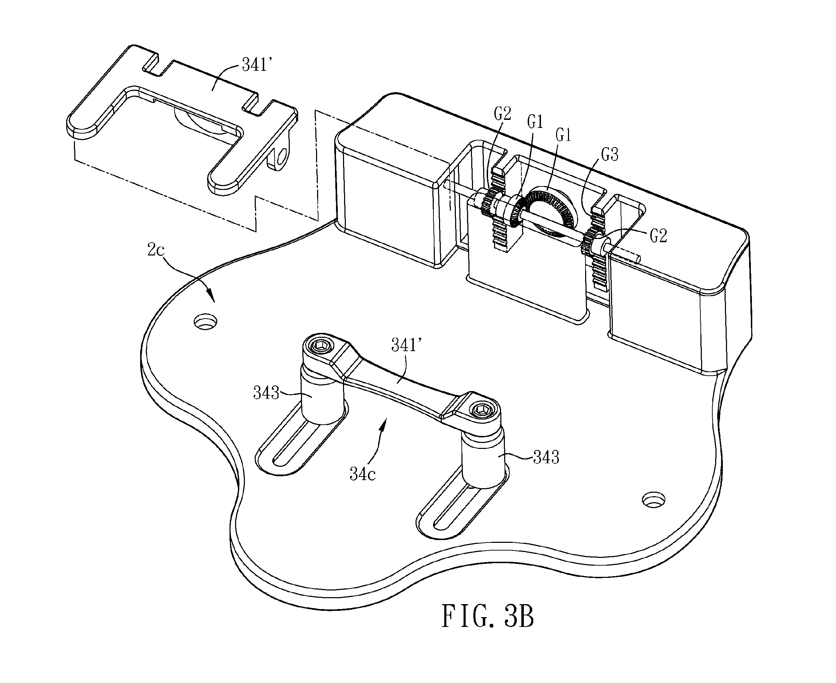

In addition, the fixing unit 34c disposed at the rear end of the base 2c includes a plurality of vertical adjusting members for adjusting the fixing members 341' to a proper height so as to contact against the articulator. The fixing unit 34c is mounted in a casing for protection. FIG. 3B is a perspective view of the fixing unit 34c disposed at the rear end as shown in FIG. 3A. As shown in FIG. 3A, the adjusting structure 3 is not shown and the fixing member 341' of the fixing unit 34c is separated. The vertical adjusting members 345 of the fixing unit 34c are rotation vertical adjusting members, which are rotatable for driving the fixing members 341' to move along the vertical direction. In more specific, the vertical adjusting members 345 are gears such as bevel gears G1, gears G2 and racks G3. These gears are configured to engage with each other so as to form a gear rack assembly for controlling the vertical movement of the fixing member 341'.

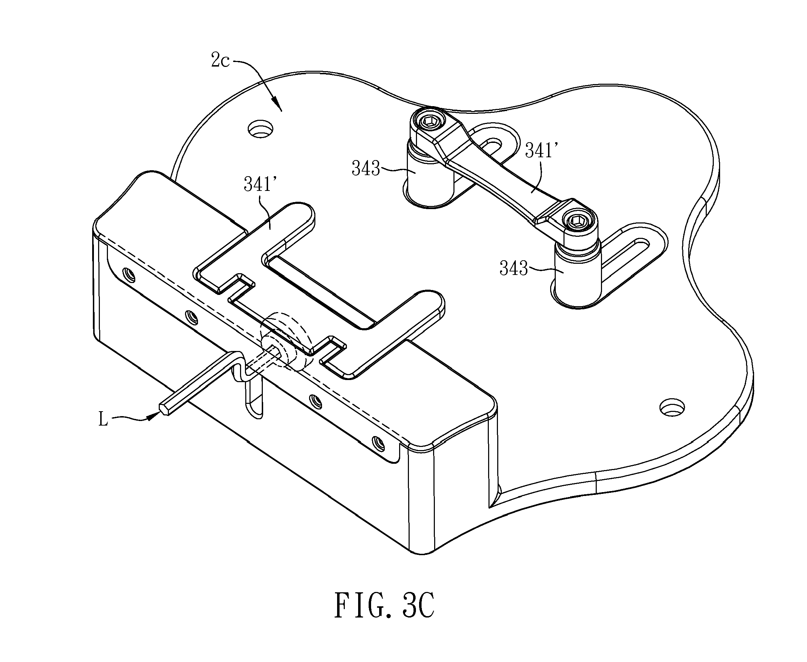

The method for controlling the movement of the fixing member 341' will be described with reference to FIG. 3C, which is a schematic diagram showing the operation of the fixing unit 34c disposed at the rear end of the base 2c as shown in FIG. 3A. In this case, the operation inserts a rod member L into the fixing unit 34c so as to connect with the bevel gear G1. When rotating the rod member L, the bevel gear G1 is rotated and drives another bevel gear G1 to rotate, so that the gear G2 can be moved along the rack G3. To be noted, since the gear rack assembly has a one-way driving relationship, the fixing member 341' will not be moved if the operator stops rotating the rod member L. This is very convenient in operation. Besides, the rod member L can be received in the recess on the bottom of the base 2c, so it can be easily carried.

To be noted, the number, size and shape of the fixing unit are not limited to the above example. For example, in other aspects, the fixing unit 34c disposed at the front end of the base 2c may include rotation horizontal adjusting members, which are similar to the above-mentioned gear rack assembly. Accordingly, the fixing members 341' can be controlled and moved horizontally.

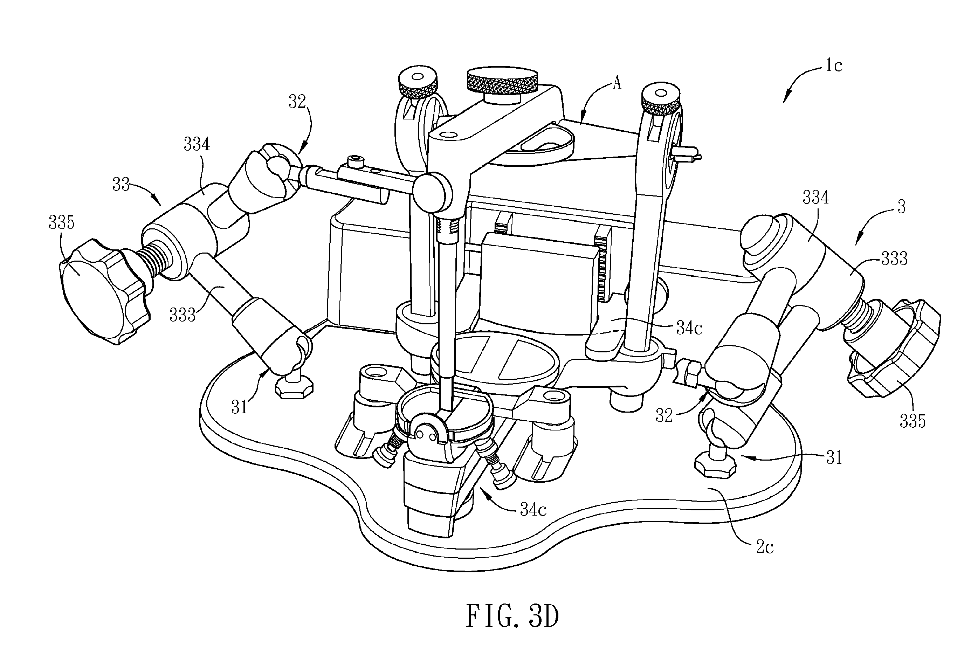

FIG. 3D is a schematic diagram showing an articulator A disposed on the auxiliary device 1c of FIG. 3A. Referring to FIG. 3D, when the articulator A is fixed by the fixing unit 34c of the auxiliary device 1c, it can be stably and firmly fixed on the based 2c. In addition, since the height of the fixing unit 34c is adjustable, the auxiliary device 1c has very flexible applications and thus can be applied to various kinds of articulators A.

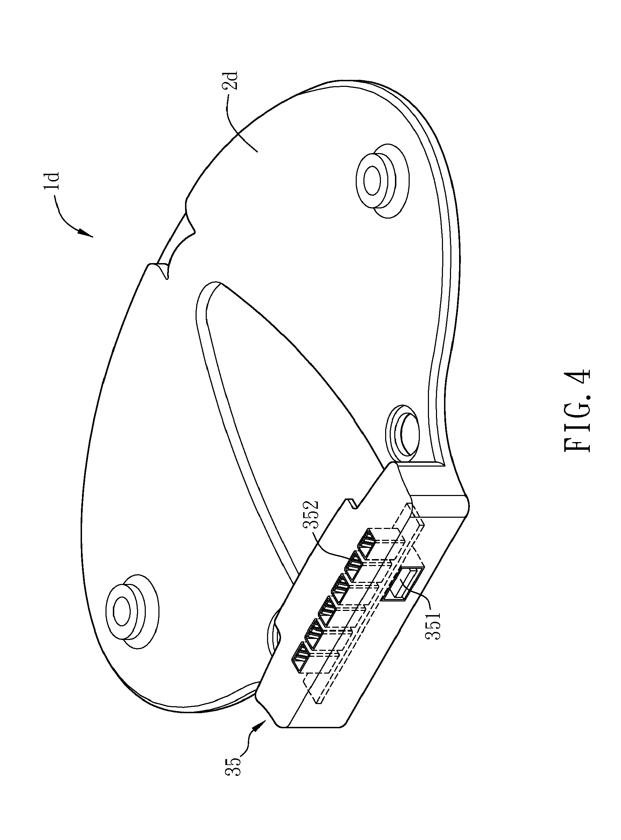

FIG. 4 is a perspective view of a power supply module 35 of another auxiliary device 1d according to the preferred embodiment of the present invention. With reference to FIG. 4, the auxiliary device 1d further includes a power supply module 35, which is disposed at the rear end of the base 2d and has a power input unit 351 and at least a power output unit 352. The power supply module 35 can provide the necessary power source to the auxiliary device 1d for performing optical positioning, automatic adjustment, and the likes, thereby broadening the application of the auxiliary device 1d. In this embodiment, the power supply module 35 has a power input unit 351 and six power output units 35, which are all USB connectors. The power input unit 351 can be connected to the city electricity, and the power output units 352 are connected to LEDs. However, this is not to limit the invention, and the power input unit 351 and the power output units 352 may be other kinds of connectors.

In summary, the auxiliary device of the invention has at least an adjusting structure and a base, so that the articulator can be steadily fixed on the base and then the dental cast or teeth portions can be adjusted through the movement of the adjusting structure, which has high degrees of freedom. In addition, after adjusting to a desired angle, the adjusting structure can easily fixed through a compressing member. This is very simple in operation and does not need to use wax to fix the teeth portions. Thus, the time for applying and solidifying the wax can be skipped, which allows the operator and doctor to precisely create the operation plan. Furthermore, since the auxiliary device can enhance the stability and convenience of the articulator in operation, the operation of the articulator and the preoperative planning can be properly adjusted immediately.

Compared with the conventional art, the adjusting structure of the invention is similar to a robot arm, so that the operator or doctor can easily adjusting the adjusting structure to replace the conventional manual operation. This feature can reduce the tiredness and increase the stability during the repeated adjustment processes. Besides, since the adjusting structure can be easily fixed or released, the repeated steps of solidifying and melting wax can be omitted. Thus, the present invention can achieve the real-time adjustment and rapid response. More importantly, the adjusting structure can be moved in multiple angle or direction and steadily support the dental cast, so that the operator or doctor can fast and precisely make the operation plan. According to the application of the invention, the reliability and convenience of the preoperative planning processes of the orthodontics and orthognathic planning can be effectively improved. In addition, the auxiliary device for an articulator of the invention further has a fixing unit disposed on the base for enhancing the connection of the articulator and the base. Thus, various kinds of articulators can have better application and utility with the auxiliary device.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An auxiliary device for an articulator, wherein a dental cast is disposed on the articulator, the auxiliary device comprising:
a base for positioning the articulator; and
at least an adjusting structure disposed on the base and comprising:
a first ball joint connected to the base,
a second ball joint, and
a connecting assembly, wherein two ends of the connecting assembly are connected to the first ball joint and the second ball joint, respectively;
wherein, the adjusting structure is moved relatively to the articulator by a movement of at least one of the first ball joint and the second ball joint, thereby adjusting a position of the dental cast.

2. The auxiliary device of claim 1, wherein the first ball joint has a rod portion and a rotation portion, and the first ball joint is connected to the base through the rod portion and connected to the connecting assembly through the rotation portion.

3. The auxiliary device of claim 1, wherein the second ball joint has a rod portion and a rotation portion, and the second ball joint is connected to the dental cast through the rod portion and connected to the connecting assembly through the rotation portion.

4. The auxiliary device of claim 3, wherein the rod portion has two elongated members, which are adjustably combined.

5. The auxiliary device of claim 1, wherein the connecting assembly has at least an accommodating space for accommodating the first ball joint or the second ball joint.

6. The auxiliary device of claim 5, wherein the connecting assembly has two accommodating spaces disposed at the two ends of the connecting assembly.

7. The auxiliary device of claim 1, wherein the connecting assembly has two pillar portions, which are pivotly connected to each other.

8. The auxiliary device of claim 7, wherein the connecting assembly has a compressing member, and the pillar portions are pivotly connected to the compressing member.

9. The auxiliary device of claim 1, wherein the adjusting structure is detachably disposed on the base.

10. The auxiliary device of claim 1, further comprising:
at least a fixing unit disposed on the base for fixing the articulator on the base.

11. The auxiliary device of claim 10, wherein the fixing unit has a fixing member and an adjusting member, and the fixing member is connected to the adjusting member.

12. The auxiliary device of claim 11, wherein the adjusting member comprises a horizontal adjusting member or a vertical adjusting member.

13. The auxiliary device of claim 12, wherein the adjusting member comprises a rotation horizontal adjusting member or rotation vertical adjusting member.

14. The auxiliary device of claim 1, wherein the base and the articulator have corresponding locking structures, or a sliding rail and a sliding recess, respectively.

15. The auxiliary device of claim 1, further comprising:
a power supply module disposed on the base, wherein the power supply module has a power input unit and at least a power output unit.
